# EUROPEAN PATENT APPLICATION

(11) **EP 4 382 994 A1**
(43) Date of publication of application: **12.06.2024**
(21) Application number: 22860831.1
(22) Date of filing: 09.03.2022
(51) Int. Cl.: G02B 27/02, H04N 5/64

(54) **IMAGE DISPLAY DEVICE AND DISPLAY DEVICE**

(30) Priority: 23.08.2021 JP 2021135299
(71) Applicant: Sony Group Corporation, Tokyo 108-0075 (JP)
(72) Inventor: SHIMIZU, Kazue, Tokyo 108-0075 (JP); KIHARA, Nobuhiro, Tokyo 108-0075 (JP)
(74) Representative: D Young & Co LLP
(86) International application number: PCT/JP2022/010188
(87) International publication number: WO 2023/026533

(57) **Abstract**

Provided is an image display apparatus that makes it possible to achieve further improvement in image quality.

Provided is an image display apparatus at least including: an optical engine; at least two light guide plates; and an optical element disposed between a first light guide plate and a second light guide plate that constitute the at least two light guide plates, in which a first input diffraction grating and a first output diffraction grating are disposed in the first light guide plate, a second input diffraction grating and a second output diffraction grating are disposed in the second light guide plate, light having a first wavelength band, which is emitted from the optical engine, is guided into the first light guide plate through the second input diffraction grating, the optical element, and the first input diffraction grating in this order, propagated by total reflection, and emitted outside the first light guide plate through the first output diffraction grating, and light having a second wavelength band, which is emitted from the optical engine, is guided into the second light guide plate through the second input diffraction grating, propagated by total reflection, and emitted outside the second light guide plate through the second output diffraction grating.

## Description

### Technical Field

The present technology relates to an image display apparatus and a display apparatus.

### Background Art

In recent years, attention has been focused on a technology of superimposing an image on a scene in the outside world and displaying the resultant image. This technology is also referred to as augmented reality (AR) technology. One of the products using this technology is a head-mounted display. The head-mounted display is used by being mounted on the head of a user. In an image display method using the head-mounted display, for example, light from the head-mounted display in addition to light from the outside world reaches the eyes of the user, and the user recognizes that the image formed by the light from that display is superimposed on the image of the outside world.

For example, Patent Literature 1 proposes a technology related to eyewear using a plurality of light guide plates. Further, for example, Patent Literature 2 proposes a technology related to an optical device configured to sandwich an optical element between light guide plates.

### Citation List

### Patent Literature

Patent Literature 1: Japanese Patent Application Laid-open No. 2007-11057
Patent Literature 2: Japanese Patent Application Laid-open No. 2015-99238

### Disclosure of Invention

### Technical Problem

However, in the technologies proposed in Patent Literatures 1 and 2, there is a possibility that the image quality cannot be further improved due to the influence of an installation tolerance between the light guide plates.

In this regard, the present technology has been made in view of such circumstances, and a principal object of the present technology is to provide an image display apparatus capable of achieving further improvement in image quality and a display apparatus including the image display apparatus. Solution to Problem

As a result of intensive studies to achieve the above object, the inventors of the present technology have surprisingly succeeded in achieving further improvement in image quality and have completed the present technology.

In other words, the present technology provides, as a first aspect, an image display apparatus at least including: an optical engine; at least two light guide plates; and an optical element disposed between a first light guide plate and a second light guide plate that constitute the at least two light guide plates, in which a first input diffraction grating and a first output diffraction grating are disposed in the first light guide plate, a second input diffraction grating and a second output diffraction grating are disposed in the second light guide plate, light having a first wavelength band, which is emitted from the optical engine, is guided into the first light guide plate through the second input diffraction grating, the optical element, and the first input diffraction grating in this order, propagated by total reflection, and emitted outside the first light guide plate through the first output diffraction grating, and light having a second wavelength band, which is emitted from the optical engine, is guided into the second light guide plate through the second input diffraction grating, propagated by total reflection, and emitted outside the second light guide plate through the second output diffraction grating.

In the image display apparatus of the first aspect according to the present technology, an air layer and/or a low-refractive-index material layer may be disposed between the first light guide plate and the optical element.

In the image display apparatus of the first aspect according to the present technology, the optical element may be a wavelength-selective optical element.

In the image display apparatus of the first aspect according to the present technology, the wavelength-selective optical element may be an absorption-type filter.

In the image display apparatus of the first aspect according to the present technology, the wavelength-selective optical element may be a reflective multi-layer coating.

In the image display apparatus of the first aspect according to the present technology, the optical element may include a wavelength polarization separation filter and an absorption-type polarizing plate.

In the image display apparatus of the first aspect according to the present technology, the optical element may include a polarizing plate, a wavelength polarization separation filter, and an absorption-type polarizing plate.

In the image display apparatus of the first aspect according to the present technology, at least one diffraction grating of the first input diffraction grating, the first output diffraction grating, the second input diffraction grating, or the second output diffraction grating may be a surface relief diffraction grating.

In the image display apparatus of the first aspect according to the present technology, at least one diffraction grating of the first input diffraction grating, the first output diffraction grating, the second input diffraction grating, or the second output diffraction grating may be a volume hologram.

In the image display apparatus of the first aspect according to the present technology, at least one diffraction grating of the first input diffraction grating, the first output diffraction grating, the second input diffraction grating, or the second output diffraction grating may be a reflective diffraction grating.

In the image display apparatus of the first aspect according to the present technology, at least one diffraction grating of the first input diffraction grating, the first output diffraction grating, the second input diffraction grating, or the second output diffraction grating may be a transmissive diffraction grating.

In the image display apparatus of the first aspect according to the present technology, refractive indices of the first light guide plate and the second light guide plate and refractive indices of the first input diffraction grating, the first output diffraction grating, the second input diffraction grating, and the second output diffraction grating may be substantially identical to each other.

In the image display apparatus of the first aspect according to the present technology, refractive indices of the first light guide plate and the second light guide plate and refractive indices of the first input diffraction grating, the first output diffraction grating, the second input diffraction grating, and the second output diffraction grating may be different from each other.

In the image display apparatus of the first aspect according to the present technology, a third diffraction grating may be further disposed in each of the first light guide plate and the second light guide plate.

In the image display apparatus of the first aspect according to the present technology, the light having the first wavelength band may be blue light, and the light having the second wavelength band may be green light and red light.

In the image display apparatus of the first aspect according to the present technology, an incident angle at which the light having the first wavelength band is incident on the second input diffraction grating and an incident angle at which the light having the second wavelength band is incident on the second input diffraction grating may be different from each other.

In the image display apparatus of the first aspect according to the present technology, the at least two light guide plates may include the first light guide plate, the second light guide plate, and a third light guide plate, a first optical element may be disposed between the first light guide plate and the second light guide plate, a second optical element may be disposed between the third light guide plate and the first light guide plate, the first input diffraction grating and the first output diffraction grating may be disposed in the first guide plate, the second input diffraction grating and the second output diffraction grating may be disposed in the second light guide plate, a third input diffraction grating and a third output diffraction grating may be disposed in the third light guide plate, the light having the first wavelength band, which is emitted from the optical engine, may be guided into the first light guide plate through the second input diffraction grating, the first optical element, and the first input diffraction grating in this order, propagated by total reflection, and emitted outside the first light guide plate through the first output diffraction grating, the light having the second wavelength band, which is emitted from the optical engine, may be guided into the second light guide plate through the second input diffraction grating, propagated by total reflection, and emitted outside the second light guide plate through the second output diffraction grating, and light having a third wavelength band, which is emitted from the optical engine, may be guided into the third light guide plate through the second input diffraction grating, the first optical element, the first input diffraction grating, the second optical element, and the third input diffraction grating in this order, propagated by total reflection, and emitted outside the third light guide plate through the third output diffraction grating.

In the image display apparatus of the first aspect according to the present technology, the light having the second wavelength band may be green light.

In the image display apparatus of the first aspect according to the present technology, the light having the first wavelength band and the light having the third wavelength band may be blue light, and the light having the second wavelength band may be green light and red light.

In the image display apparatus of the first aspect according to the present technology, the light having the second wavelength band may be green light, the light having the first wavelength band may be red light, and the light having the third wavelength band may be blue light.

Further, the present technology provides, as a second aspect, a display apparatus including: a frame mounted onto a head of a user; and an image display apparatus attached to the frame, in which the image display apparatus is the image display apparatus of the first aspect according to the present technology.

According to the present technology, it may be possible to achieve further improvement in image quality. Note that the effects described therein are not necessarily limited and may be any effect described in the present disclosure.

### Brief Description of Drawings

[Fig. 1] Fig. 1 is a diagram showing a configuration example of an image display apparatus to which the present technology is applied.
[Fig. 2] Fig. 2 is a schematic diagram for describing degradation in image quality due to return light.
[Fig. 3] Fig. 3 is a diagram for describing correction of image displacement between light guide plates on an optical engine panel.
[Fig. 4] Fig. 4 is a diagram showing a configuration example of an image display apparatus of a first embodiment to which the present technology is applied.
[Fig. 5] Fig. 5 is a diagram for describing a wavelength-selective optical element, an incident light spectrum, and its change.
[Fig. 6] Fig. 6 is a diagram for describing a comparison between a case where air or a low-refractive-index layer is present between a light guide plate and an optical element and a case where air and a low-refractive-index layer are not present between the light guide plate and the optical element.
[Fig. 7] Fig. 7 is a diagram for describing a comparison between a case where there is no optical contact between the light guide plate and the optical element and a case where there is an optical contact between the light guide plate and the optical element.
[Fig. 8] Fig. 8 is a diagram for describing installation examples for maintaining the parallelism of two light guide plates.
[Fig. 9] Fig. 9 is a diagram for describing an image display apparatus of a second embodiment to which the present technology is applied, specifically, a diagram for describing a multi-layer wavelength-selective optical element, an incident light spectrum, and its change.
[Fig. 10] Fig. 10 is a diagram for describing an image display apparatus of a third embodiment to which the present technology is applied, and specifically, a diagram for describing a form in which wavelength polarization separation filters are used.
[Fig. 11] Fig. 11 is a diagram for describing an image display apparatus of a fourth embodiment to which the present technology is applied, specifically, a diagram for describing a form of a diffraction grating.
[Fig. 12] Fig. 12 is a diagram for describing an image display apparatus of a fifth embodiment to which the present technology is applied, and specifically, a diagram for describing installation forms of diffraction gratings when an optical element is disposed in a space between two light guide plates.
[Fig. 13] Fig. 13 is a diagram for describing an image display apparatus of a fifth embodiment to which the present technology is applied, and specifically, a diagram for describing installation forms of diffraction gratings when a multi-layer optical element (multi-layer coating) is disposed in a space between two light guide plates.
[Fig. 14] Fig. 14 is a diagram showing configuration examples of an image display apparatus of an eighth embodiment to which the present technology is applied.
[Fig. 15] Fig. 15 is a diagram for describing an image display apparatus of a twelfth embodiment to which the present technology is applied, and specifically, a diagram for describing various methods of two-axis pupil expansion.

### Mode(s) for Carrying Out the Invention

Hereinafter, suitable forms for carrying out the present technology will be described. The embodiments to be described below are examples of representative embodiments of the present technology, and the scope of the present technology is not narrowly interpreted by those embodiments. Note that, unless otherwise specified, in the drawings, "upper" means an upper direction or an upper side in the drawings, "lower" means a lower direction or a lower side in the drawings, "left" means a left direction or a left side in the drawings, and "right" means a right direction or a right side in the drawings. Further, in the description using the drawings, the same or equivalent elements or members are denoted by the same reference symbols, and redundant descriptions are omitted except in special circumstances.

Note that the description will be given in the following order.
1. General Outline of Present Technology
2. First Embodiment (Example 1 of Image Display Apparatus)
3. Second Embodiment (Example 2 of Image Display Apparatus)
4. Third Embodiment (Example 3 of Image Display Apparatus)
5. Fourth Embodiment (Example 4 of Image Display Apparatus)
6. Fifth Embodiment (Example 5 of Image Display Apparatus)
7. Sixth Embodiment (Example 6 of Image Display Apparatus)
8. Seventh Embodiment (Example 7 of Image Display Apparatus)
9. Eighth Embodiment (Example 8 of Image Display Apparatus)
10. Ninth Embodiment (Example 9 of Image Display Apparatus)
11. Tenth Embodiment (Example 10 of Image Display Apparatus)
12. Eleventh Embodiment (Example 11 of Image Display Apparatus)
13. Twelfth Embodiment (Example 12 of Image Display Apparatus)
14. Thirteenth Embodiment (Example 1 of Display Apparatus)

### <1. General Outline of Present Technology>

First, the general outline of the present technology will be described. The present technology relates to an image display apparatus and a display apparatus.

First, a technical example 1 related to eyewear using a plurality of light guide plates will be described. The configuration of the eyewear is a configuration in which different volume diffraction gratings are respectively disposed in two or more plates, and light of the same color and different angles of view or light of different wavelengths is guided. The former is viewing angle division, and the latter is a method of stacking light guide plates for colorization. Here, a configuration of a reflective volume hologram is taken. In the technical example 1, a configuration of a volume hologram having high wavelength selectivity and high angle selectivity is assumed as a premise. In order to widen a diffraction efficiency distribution, multiple exposure or stacking of grating fringes having different diffraction grating slant angles has been proposed, on the assumption that there is a limit to an angular distribution that can be taken without reducing the diffraction efficiency. For that reason, re-diffraction by return light in the multiple plates as diffraction gratings is not assumed. If such a configuration is applied to the present technology as it is, there is a possibility that a ghost occurs due to an installation tolerance between the light guide plates (the installation tolerance refers to occurrence of a predetermined angle (angular deviation) when the installed light guide plates are not always completely parallel to each other and when an installation angle of one light guide plate to the other light guide plate is not zero degrees.) or a tolerance such as a thickness or warpage of each light guide plate itself.

Next, a technical example 2 related to a configuration in which an optical element is sandwiched between light guide plates will be described. The technical example 2 is also a configuration for eyewear. The technical example 2 is the same as the present technology in that it includes a plurality of plates and that an optical element is sandwiched between the plates, but has a configuration different from the present technology in that an optical element is installed between diffractive elements on the OUT side (output side). A problem to be solved with this configuration is a countermeasure for an efficiency decrease and unnecessary diffracted light (ghost) that are caused when the light output (emitted) from the outer light guide plate undergoes re-diffraction on the near side due to the configuration of the plurality of light guide plates. By rotating the polarized light, the light output from the light guide plate on the far side is prevented from being subjected to re-diffraction by the light guide plate on the near side and from reducing the efficiency. However, on the assumption that polarization states of light that can be output by the respective light guide plates are different from each other, the configuration of the present technology that is not restricted by the polarization states cannot be used as it is. Further, even if the polarized light is narrowed to adopt this configuration, it is not possible to compensate the angular tolerance of the return light of the light guided into the light guide plate in this configuration because the concern of the present technology is degradation in image quality due to the return light on the IN side (input side). In particular, it is considered that an installation tolerance in actual manufacturing becomes severe by arranging the optical element. This is because the installation on the OUT side (output side) includes holding of a filter and the installation on the IN side (input side) includes only light guide plates as the two light guide plates, and further, it is very difficult to make the parallelism between the light guide plates precisely coincide with each other due to the distance between the two light guide plates that is widened more than before. In addition, unnecessary light is generated on the assumption that diffraction occurs in the transmitted light entering the light guide plate on the near side from the light guide plate on the far side due to the transmission diffraction. There is no idea for the reflection diffraction design in the technical example 2, and the technical example 2 is considered to be fundamentally different from the present technology.

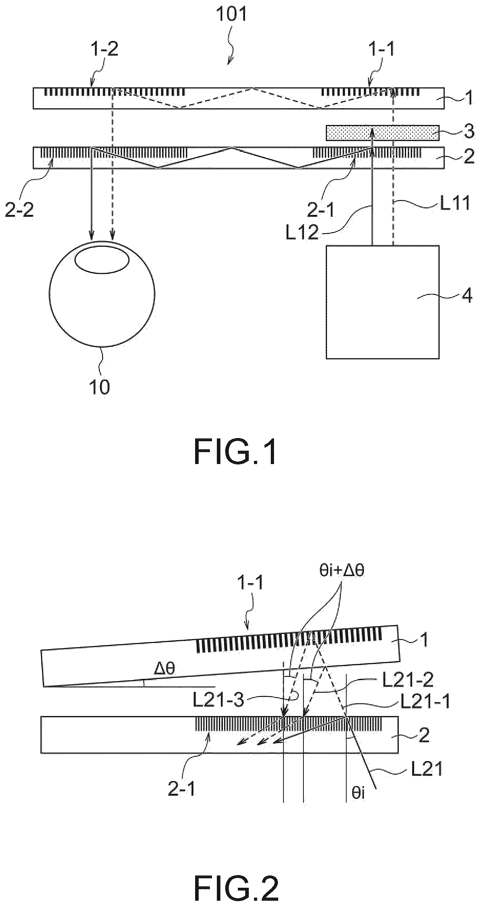

In order to achieve both colorization and an angle-of-view size in the eyewear using the light guide plate method, a configuration in which a light guide plate is formed of a plurality of light guide plates is conceivable in addition to an increase in refractive index of material. For example, there are conceivable a configuration using three colors of RGB; a configuration in which one of the two light guide plates guides a plurality of wavelengths Red and Green, and the other light guide plate guides the remaining wavelength Blue; and in the case of three colors of RGB, three plates are superimposed for the respective wavelengths. In order to widen the angle of view, the angle range of the diffraction efficiency of the diffraction grating needs to be widen. A surface relief diffraction grating is useful for this purpose. In general, the diffraction efficiency range can be wider than that of the volume hologram. In such a case, there is light in which light having a wavelength guided through a light guide plate on the near side (optical engine side) is reflected by the surface of the light guide plate on the far side or the surface of the diffraction grating, and return light of the diffracted and re-diffracted light is diffracted again on the light guide plate on the near side and then guided. There is no problem as long as the light guide plates have no unevenness in thickness and are installed completely parallel to each other, but in reality, a tolerance exists in both the thickness of the plate and the installation angle. At that time, the return light takes in such an angular tolerance, and the tolerance is generated as an incident angular tolerance with respect to the surface of the diffraction grating. When there is a tolerance in the incident angle, the tolerance is also taken in as a light guide angle, and finally, an emission angle from the light guide plate, which was originally the same angle, is emitted as another angle. This leads to double images and MTF degradation, resulting in degradation in image quality (Fig. 2).

Description will be continued with reference to Fig. 2. Fig. 2 is a schematic diagram for describing degradation in image quality due to the return light.

When the diffraction efficiency with respect to the angle is made large, it may be difficult to design the diffraction efficiency to 100%, and transmitted light L21-1 certainly exists. If a refractive index interface is present, return light L21-2 and L21-3 are certainly generated due to the transmitted light. Although the return light can be suppressed to some extent by AR coating, particularly when a surface relief diffraction grating is coated with a high refractive index material, specular return light is generated in a diffraction grating 1-1. If the transmission-side diffraction efficiency of the light guide plate 2 on the near side is present, light with an angular deviation, which takes in the installation tolerance of the light guide plate (angular deviation of Δθ), is diffracted and there is a possibility that double images and blurred images are provided, resulting in degradation in image quality.

The present technology has been made in view of the circumstances as described above.

In the present technology, in order to prevent degradation in image quality, an optical element that prevents return light with respect to the incident angle is inserted between the light guide plates at a location where there is an IN (input) diffraction grating. The optical element has a function of cutting unnecessary light entering the light guide plate on the far side (opposite to the optical engine side), and is installed via an air layer or a material having a sufficiently low refractive index between the light guide plate on the far side and the optical element. Since the gaps at IN (input) and at OUT (output) are different from each other in distance due to the intermediation of the optical element, the distance is ensured using a spacer or adhesive layer outside a light-guiding range so as to correct the difference.

Description will be continued with reference to Fig. 1. Fig. 1 is a diagram showing a configuration example of an image display apparatus according to the present technology, specifically, a diagram showing an image display apparatus 101.

The image display apparatus 101 at least includes an optical engine 4, a light guide plate 2 (second light guide plate) on a near side as viewed from the optical engine 4, a light guide plate 1 (first light guide plate) on a far side as viewed from the optical engine 4, and an optical element 3 (e.g., wavelength-selective optical element) disposed between the light guide plate 2 and the light guide plate 1.

In the light guide plate 1, a first input diffraction grating 1-1 and a first output diffraction grating 1-2 are disposed. In the light guide plate 2, a second input diffraction grating 2-1 and a second output diffraction grating 2-2 are disposed.

Light L11 having a first wavelength band, which is emitted from the optical engine 4, is guided into the light guide plate 1 via the second input diffraction grating 2-1, the optical element 3, and the first input diffraction grating 1-1 in this order to be propagated by total reflection, and emitted outside the first light guide plate 1 via the first output diffraction grating 1-2, to reach an eyeball (pupil) 10. Light L12 having a second wavelength band, which is emitted from the optical engine 4, is guided into the light guide plate 2 via the second input diffraction grating 2-1 to be propagated by total reflection, and emitted outside the light guide plate 2 via the second output diffraction grating 2-2, to reach the eyeball (pupil) 10.

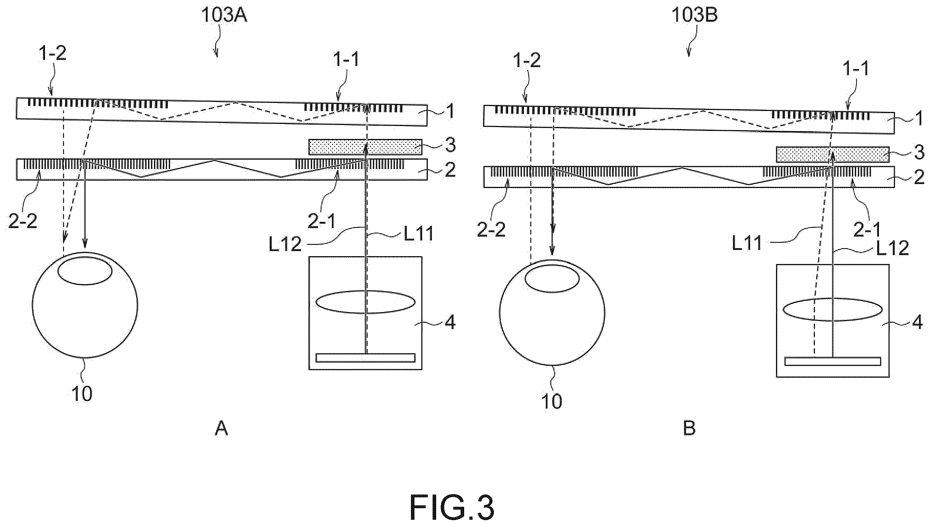

Description will be continued with reference to Fig. 3. When the parallelism of each plate is not completely obtained and when a difference of one pixel or more occurs in the emission angle from each plate with respect to the incident angle due to an angular tolerance corresponding to at least one half or more of one pixel of the panel, chromatic aberration is compensated by image correction on the engine panel side. As shown in B of Fig. 3, an incident angle at which the light L11 having a first wavelength band is incident on the second input diffraction grating 2-1 is different from an incident angle at which the light L12 having a second wavelength band is incident on the second input diffraction grating 2-1. Thus, a display position of the light L11 (colored) to be guided into the light guide plate 1 on the far side can be shifted and corrected on the panel side of the optical engine 4.

Hereinafter, suitable embodiments for carrying out the present technology will be described specifically and in detail with reference to the drawings. Embodiments to be described below are examples of representative embodiments of the present technology, and the scope of the present technology is not construed as being limited to the embodiments.

### <2. First Embodiment (Example 1 of Image Display Apparatus)>

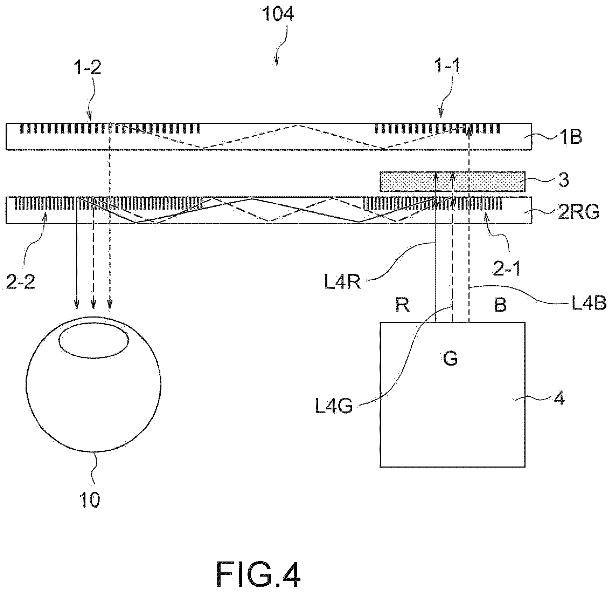

An image display apparatus of a first embodiment (example 1 of image display apparatus) according to the present technology will be described with reference to Figs. 4 to 8.

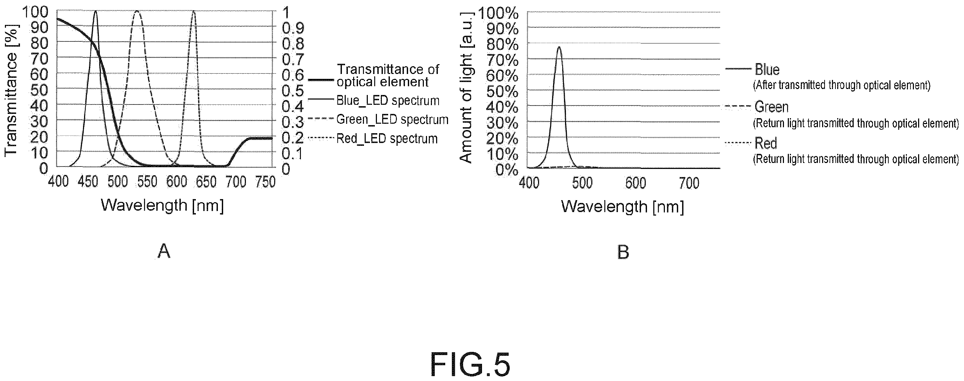

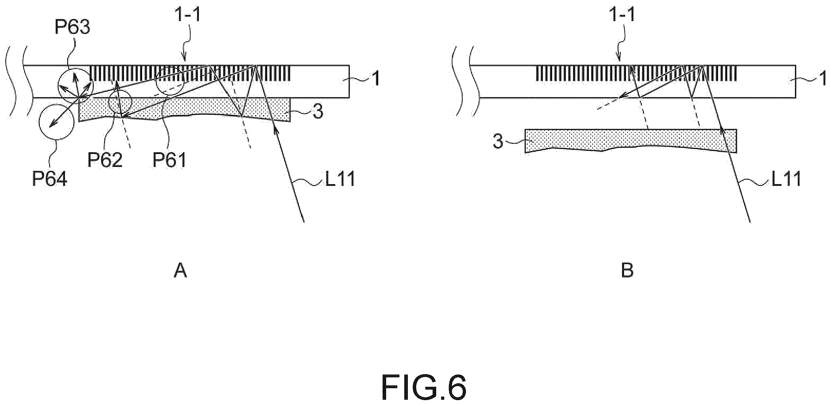

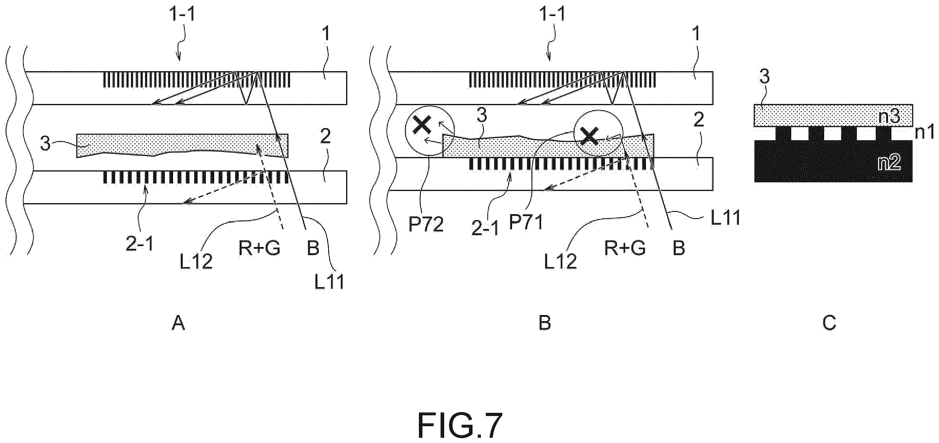

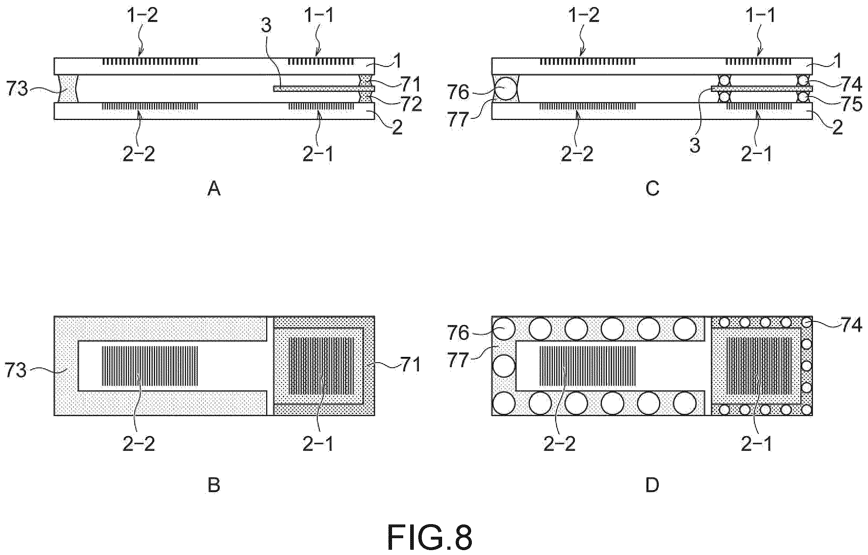

Fig. 4 is a diagram showing a configuration example of an image display apparatus of a first embodiment according to the present technology, specifically, a diagram showing an image display apparatus 104. Fig. 5 is a diagram for describing a wavelength-selective optical element 3, an incident light spectrum, and its change. In a graph shown in A of Fig. 5, the horizontal axis represents a wavelength [nm], and the vertical axis represents a transmittance [%]. In a graph shown in B of Fig. 5, the horizontal axis represents a wavelength [nm], and the vertical axis represents the amount of light [a.u.]. Fig. 6 is a diagram for describing a comparison between a case where air or a low-refractive-index layer is present between the light guide plate 1 and the wavelength-selective optical element (optical element) 3 and a case where air and a low-refractive-index layer are not present between the light guide plate 1 and the wavelength-selective optical element (optical element) 3. Fig. 7 is a diagram for describing a comparison between a case where there is no optical contact between the light guide plate 1 and the wavelength-selective optical element (optical element) 3 and a case where there is an optical contact between the light guide plate 1 and the wavelength-selective optical element (optical element) 3. Fig. 8 is a diagram for describing installation examples for maintaining the parallelism of the two light guide plates (light guide plates 1 and 2). A and C of Fig. 8 are diagrams of the light guide plates 1 and 2 as viewed laterally, and B and D of Fig. 8 are diagrams of the light guide plates 1 and 2 as viewed from the top.

In the image display apparatus 104 of the first embodiment according to the present technology, an unpolarized LED light source was used, in which a light source wavelength of the optical engine 4 has peak wavelengths of λ(B) = 460 nm (blue light L4B), A(G) = 530 nm (green light L4G), and X(R) = 620 nm (red light L4R). The output from the optical engine 4 is also unpolarized. Light having a first wavelength band corresponds to the blue light L4B, and light having a second wavelength band corresponds to the green light L4G and the red light L4R.

The central incident angle with respect to light guide plates 1B and 2RG are zero degrees. The light guide plates 1B and 2RG, surface relief diffraction gratings for IN (input) 1-1 and 2-1, and surface relief diffraction gratings for OUT (output) 1-2 and 2-2 may have a refractive index of approximately 1.6. The image display apparatus 104 is configured to include two light guide plates (light guide plates 1B and 2RG) overlapping with each other. The image display apparatus 104 includes, from the side closer to the optical engine 4, the light guide plate 2RG that guides the Red (R) light L4R and the Green (G) light L4G and the light guide plate 1B that guides the Blue (B) L4B. The pitch of the diffraction gratings 2-1 and 2-2 disposed in the light guide plate 2RG may be 460 nm, and the pitch of the diffraction gratings 1-1 and 1-2 disposed in the light guide plate 1B is 340 nm.

The diffraction grating 1-1 disposed in the light guide plate 1B on the far side (upper side in Fig. 4) of the optical engine 4 may be provided with a metal coating (not shown) such as aluminum to increase the diffraction efficiency and to increase the incidence efficiency to the light guide plate 1B. However, on the other hand, the specular return light is also greatly increased, which may be a factor of degradation in image quality. Meanwhile, the diffraction grating 2-1 disposed in the light guide plate 2RG on the near side (lower side in Fig. 4) of the optical engine 4 is coated with a high-refractive-index material such as TiO₂ in order to increase the diffraction efficiency, so that the diffraction efficiency can be increased. The reason why a high-refractive-index material is used is that a metallic film drastically reduces efficiency and the transparency to the light guide plate 1B on the far side is ensured. Since the transmittance is lowered to some extent, the incident guided light by the return light relatively rises to nearly 50% with respect to the original incident guided light. It can be seen that there is a large influence when each incident angle has a tolerance. In this regard, an absorption-type optical element (wavelength-selective optical element) 3 for Green and Red having transmission characteristics shown in A of Fig. 5 was inserted between the light guide plates. The optical element 3 is provided with an antireflection (AR) coating on the surface, and a surface reflectance is suppressed to approximately 1% (see B of Fig. 5). This aims at increasing the efficiency of the light that should enter the light guide plate 1B on the far side and at eliminating reflected light from the optical element 3 itself. This is because, when the surface reflection from the optical element 3 itself is large, it becomes an incident angular tolerance of the light returned due to an installation angular tolerance (for example, manufacturing variation of installation) of the optical element 3 and leads to a factor of degradation in image quality. In designing the transmittance, if the amount of light diffracted by the original return light with respect to a proper amount of diffracted light is assumed as X%, and when it is desired to be suppressed to R%, a transmittance T% is obtained by T = V(R/X) from R = X* (T)^2.

When the optical element 3 is installed, the optical element 3 and the light guide plate 1B on the far side need to be bonded with an air layer or a material having a sufficiently low refractive index. This is because, when the optical element 3 and the light guide plate 1B on the far side are optically bonded to each other, degradation in image quality due to the guided light in the light guide plate on the far side is avoided. For example, as shown in A of Fig. 6, when the light guide plate 1 on the far side and the optical element 3 are optically bonded to each other, three factors of the degradation in image quality are conceivable. As a first factor, if the optical element 3 itself has a thickness tolerance, the light guided to the light guide plate 1 on the far side takes in the tolerance of the optical element, and an angular tolerance of the guided light is caused (angular deviations P61 and P62 shown in A of Fig. 6). As second and third factors, the degradation in image quality is caused when the optical element 3 has a thickness on the order of micron or more. Light scattered at the edge is guided, leading to degradation in image quality of a video (scattering P63 at the edge shown in A of Fig. 6). Further, unnecessary light extracted at the edge may enter the eyes and cause an uncomfortable feeling (unnecessary light leakage P64 at the edge shown in A of Fig. 6).

Regarding the installation of the optical element 3 and the light guide plate 2 on the near side, the optical element 3 and the light guide plate 2 on the near side can be installed so as to be optically brought in contact with each other as shown in A of Fig. 7 or can be installed via air or a material having a sufficiently low refractive index as shown in B of Fig. 7 (C of Fig. 7 is a partially enlarged diagram of the wavelength-selective optical element 3 and the second input diffraction grating 2-1). This is because, regarding the light guide plate 2 on the near side, the light that enters the optical element and is guided to the light guide plate 1 on the near side is absorbed, and there are no light that takes in a tolerance of the surface and is reflected and no light emitted from the edge. Specifically, light L12 (G light + R light) is absorbed by the optical element (wavelength-selective optical element) 3 as indicated by a region P71 shown in B of Fig. 7, and thus it is not problematic. The light is absorbed by the optical element (wavelength-selective optical element) 3 as indicated by a region P72 shown in B of Fig. 7, and therefore it does not scatter.

Regarding the OUT (output) side and the light-guiding area, it is necessary to sandwich an air layer or a material having a sufficiently low refractive index. The gap between the light guide plates at the IN (input) portion is different from the gap between the light guide plates at the OUT (output) portion. For this reason, a configuration is conceivable, in which the application amount, the viscosity, or the shrinkage of adhesives 71 to 73, and a combination thereof are used in a wide gap area and a narrow gap area to obtain the installation parallelism (see A and B of Fig. 8). Further, a method of ensuring a suitable spatial distance by using an adhesive member containing minute spacers such as beads 74 to 76 corresponding to each sensation in an adhesive 77 is also one of convenient and desirable forms (see C and D of Fig. 8). Alternatively, it is also possible to perform installation using only the thickness of the adhesive.

Since an installation angular tolerance exists, for example, the angle of view range of an image that is output from the light guide plates 1 and 2 may also be displaced by twice the tolerance angle. This can be addressed by slightly performing shift adjustment on a display region of each color on the optical engine 4 side with an amount corresponding to the tolerance. Further, if the amount of distortion is different for each plate, adjustment can be performed with any displacement for each display pixel of each image height (see Fig. 3).

As described above, the contents described on the image display apparatus of the first embodiment (example 1 of image display apparatus) according to the present technology can be applied to image display apparatuses of second to twelfth embodiments according to the present technology, which will be described later, as long as there is no particular technical inconsistency.

### <3. Second Embodiment (Example 2 of Image Display Apparatus)>

An image display apparatus of a second embodiment (example 2 of image display apparatus) according to the present technology will be described.

In the image display apparatus of the first embodiment according to the present technology, the absorption-type optical element 3 is inserted. In the image display apparatus of the second embodiment (example 2 of image display apparatus) according to the present technology, a multi-layer coating is applied onto the diffraction grating 2-1 on the near side, so that reflection light can be cut.

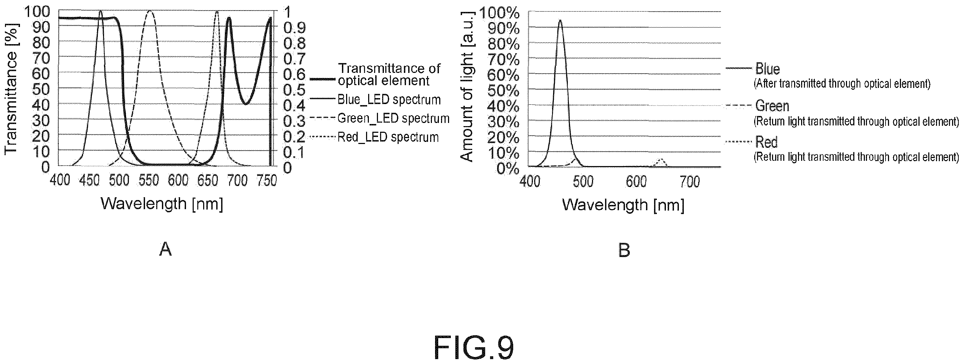

Description will be given with reference to Fig. 9. Fig. 9 is a diagram for describing the image display apparatus of the second embodiment according to the present technology and a diagram for describing a multi-layer wavelength-selective optical element, an incident light spectrum, and its change. In a graph shown in A of Fig. 9, the horizontal axis represents a wavelength [nm], and the vertical axis represents a transmittance [%]. In a graph shown in B of Fig. 9, the horizontal axis represents a wavelength [nm], and the vertical axis represents the amount of light [a.u.].

As shown in Fig. 9, if coating is directly performed on the light guide plate 2 on the near side using coating having characteristics, since there is no incidence of light from the light guide plate 1 on the far side to the diffraction grating 2-1 on the near side, the following phenomenon does not occur even if the reflection is cut: light having an angular tolerance is diffracted and guided in the light guide plate 2 on the near side. For the absorption-type optical element 3, the multi-layer wavelength-selective optical element (multi-layer coating) (which corresponds to reference numeral 31 to be described later; further, examples of the multi-layer wavelength-selective optical element include a dielectric multi-layer film.) can be sufficiently thinned to approximately several microns. Thus, the gap between the two light guide plates 1 and 2 can be reduced, and the overall layer thickness can be reduced. Further, unlike the case of sandwiching, the difficulty of installing the two light guide plates 1 and 2 is reduced. Furthermore, in the first embodiment 1, although TTiO₂ coating is applied to the light guide plate 2 on the near side, a high-refractive-index film of the multi-layer wavelength-selective optical element (multi-layer coating) functions similarly. This makes it possible to achieve both an unnecessary light-cutting effect and an original efficiency-enhancing effect.

As described above, the contents described on the image display apparatus of the second embodiment (example 2 of image display apparatus) according to the present technology can be applied to the image display apparatus of the first embodiment according to the present technology described above, and image display apparatuses of third to twelfth embodiments according to the present technology, which will be described later, as long as there is no particular technical inconsistency.

### <4. Third Embodiment (Example 3 of Image Display Apparatus)>

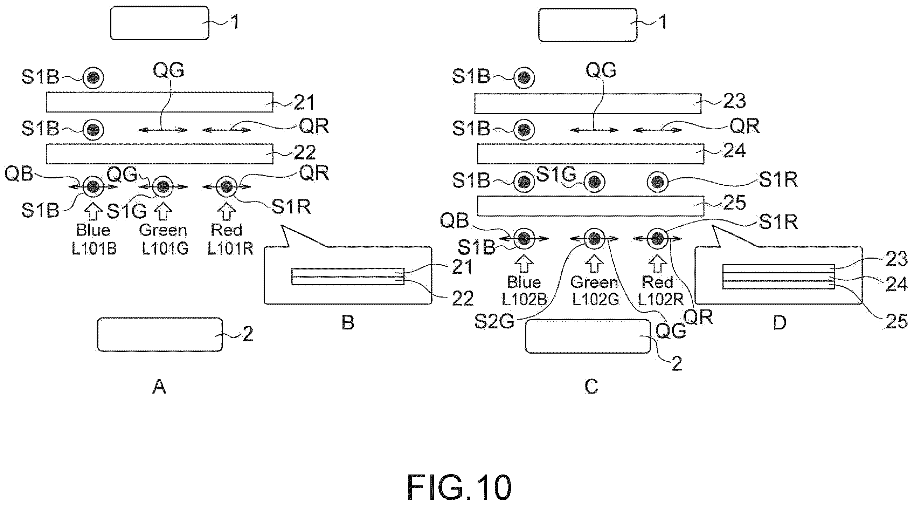

An image display apparatus of a third embodiment (example 3 of image display apparatus) according to the present technology will be described with reference to Fig. 10.

Fig. 10 is a diagram for describing the image display apparatus of the third embodiment according to the present technology, and specifically, a diagram for describing a form in which wavelength polarization separation filters 22 and 24 are used.

In the image display apparatus of the third embodiment according to the present technology, the wavelength polarization separation filters 22 and 24 and absorption-type polarizing plates 21 and 23 are used. In blue light S1B and light QB input as circularly polarized light, green light S1G and light QG input as circularly polarized light, green light S1G and light QG input as circularly polarized light, and red light S1R and QR, the wavelength polarization separation filter 22 shown in A of Fig. 10 can separate polarized light of a particular wavelength into blue light S1B in the depth direction with respect to the plane, and green light QG and red light QR in the paper surface direction. Unnecessary change in the separated polarized light is absorbed by the absorption-type polarizing plate 21 and light of only a necessary wavelength is transmitted, so that an effect of cutting unnecessary light can be obtained. In order to narrow the distance between the two plates and in consideration of ease of installation, it is desirable that the absorption-type polarizing plate 21 and the wavelength polarization separation filter 22 are bonded to each other (B of Fig. 10).

C of Fig. 10 is useful for unpolarized light. Unpolarized light is changed to linearly polarized light by a polarizing plate 25, and only a particular wavelength is rotated by 90 degrees by the wavelength polarization separation filter 24. Similarly as shown in A of Fig. 10, only a particular wavelength is transmitted through the absorption-type polarizing plate 23. If linearly polarized light is used instead of unpolarized light, the polarizing plate 25 is not required. In order to narrow the distance between the three plates and in consideration of ease of installation, it is desirable that the absorption-type polarizing plate 23, the wavelength polarization separation filter 24, and the polarizing plate 25 are bonded to each other (D of Fig. 10), though they can also be provided separately.

As described above, the contents described on the image display apparatus of the third embodiment (example 3 of image display apparatus) according to the present technology can be applied to the image display apparatuses of the first and second embodiments according to the present technology described above, and image display apparatuses of fourth to twelfth embodiments according to the present technology, which will be described later, as long as there is no particular technical inconsistency.

### <5. Fourth Embodiment (Example 4 of Image Display Apparatus)>

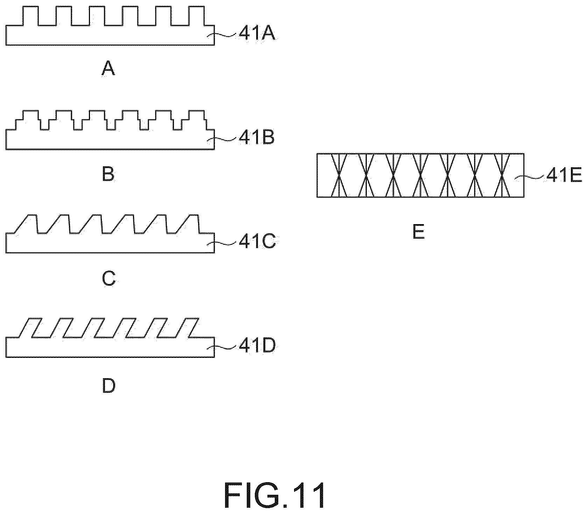

An image display apparatus of a fourth embodiment (example 4 of image display apparatus) according to the present technology will be described with reference to Fig. 11.

Fig. 11 is a diagram for describing an image display apparatus of a fourth embodiment according to the present technology, and specifically, a diagram for describing a form of a diffraction grating (surface relief diffraction gratings 41A, 41B, 41C, and 41D, and volume hologram diffraction grating 41E).

As shown in A to D of Fig. 11, surface relief gratings (SRG) 41A to 41D can be used if a diffraction efficiency distribution is widened with respect to the angle or wavelength. The surface relief grating (SRG) 41A includes convex portions each having a rectangular shape. The surface relief grating (SRG) 41B includes convex portions each having a two-step rectangular shape. The surface relief grating (SRG) 41C includes convex portions each having a trapezoidal shape. The surface relief grating (SRG) 41D includes convex portions each having an diagonal rectangular shape. In the image display apparatus of the fourth embodiment according to the present technology, any of the surface relief gratings (SRG) 41A to 41D can be discretionally selected, but it may be favorable to select the surface relief grating (SRG) 41A or 41B in terms of manufacturing suitability.

Note that, as shown in E of Fig. 11, it is also possible to use a method of performing interference exposure to obtain a plurality of slant structures on the volume hologram diffraction grating 41E and thus enhancing the diffraction efficiency as much as the surface relief gratings (SRG) 41A to 41D. In such a case, it is conceivable to need to increase the thickness in order to obtain the diffraction efficiency.

As described above, the contents described on the image display apparatus of the fourth embodiment (example 4 of image display apparatus) according to the present technology can be applied to the image display apparatuses of the first to third embodiments according to the present technology described above, and image display apparatuses of fifth to twelfth embodiments according to the present technology, which will be described later, as long as there is no particular technical inconsistency.

### <6. Fifth Embodiment (Example 5 of Image Display Apparatus)>

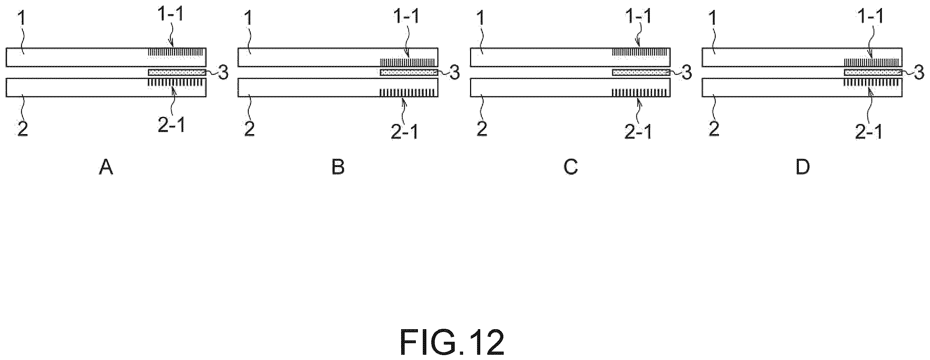

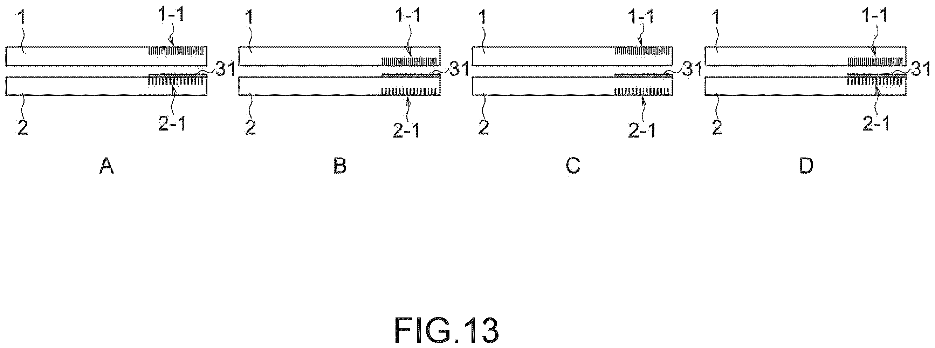

An image display apparatus of a fifth embodiment (example 5 of image display apparatus) according to the present technology will be described with reference to Figs. 12 and 13.

Fig. 12 is a diagram for describing an image display apparatus of a fifth embodiment according to the present technology, and specifically, a diagram for describing installation forms of diffraction gratings 1-1 and 2-1 when a wavelength-selective optical element (optical element) 3 is disposed in a space between two light guide plates (light guide plates 1 and 2). Fig. 13 is a diagram for describing an image display apparatus of a fifth embodiment according to the present technology, and specifically, a diagram for describing installation forms of diffraction gratings 1-1 and 2-1 when a multi-layer wavelength-selective optical element (multi-layer coating) 31 is disposed in a space between two light guide plates (light guide plates 1 and 2).

The reflective diffraction grating has been shown in the first and second embodiments, but a transmissive diffraction grating may also be used, or a reflective diffraction grating and a transmissive diffraction grating may also be used in combination. A of Fig. 12 shows a combination of a reflective input diffraction grating 1-1 and a reflective input diffraction grating 2-1. B of Fig. 12 shows a combination of a transmissive input diffraction grating 1-1 and a transmissive input diffraction grating 2-1. C of Fig. 12 shows a combination of a reflective input diffraction grating 1-1 and a transmissive input diffraction grating 2-1. D of Fig. 12 shows a combination of a transmissive diffraction grating 1-1 and a reflective input diffraction grating 2-1. A of Fig. 13 shows a combination of a reflective input diffraction grating 1-1 and a reflective input diffraction grating 2-1. B of Fig. 13 shows a combination of a transmissive input diffraction grating 1-1 and a transmissive input diffraction grating 2-1. C of Fig. 13 shows a combination of a reflective input diffraction grating 1-1 and a transmissive input diffraction grating 2-1. D of Fig. 13 shows a combination of a transmissive diffraction grating 1-1 and a reflective input diffraction grating 2-1. The reflective input diffraction grating 1-1 is disposed in the far-side surface of the light guide plate 1 as viewed from the optical engine 4 side. The transmissive input diffraction grating 1-1 is disposed in the near-side surface of the light guide plate 1 as viewed from the optical engine 4 side. The reflective input diffraction grating 2-1 is disposed in the far-side surface of the light guide plate 2 as viewed from the optical engine 4 side. The transmissive input diffraction grating 2-1 is disposed in the near-side surface of the light guide plate 2 as viewed from the optical engine 4 side.

Regarding C of Fig. 12, the surfaces of the light guide plates located on the front and rear of an installation position of the optical element 3 are flat, and thus there is an advantage that the diffraction optical surface is less likely to be damaged by the optical element 3 during assembly and manufacturing. Regarding D of Fig. 12, when the two light guide plates (light guide plates 1 and 2) are finally assembled, the possibility of causing scratches can be suppressed because there are no diffraction gratings on the outside or it may be advantageous when it is chucked from the outside during assembly. Further, in the case of the multi-layer coating 31 in the light guide plate 2 on the near side shown in the second embodiment, the coating surface is flat in B and C of Fig. 13, and thus there is an advantage that the coating designing of any characteristics is facilitated and the manufacturing performance is easy to produce.

As described above, the contents described on the image display apparatus of the fifth embodiment (example 5 of image display apparatus) according to the present technology can be applied to the image display apparatuses of the first to fourth embodiments according to the present technology described above, and image display apparatuses of sixth to twelfth embodiments according to the present technology, which will be described later, as long as there is no particular technical inconsistency.

### <7. Sixth Embodiment (Example 6 of Image Display Apparatus)>

An image display apparatus of a sixth embodiment (example 6 of image display apparatus) according to the present technology will be described.

The refractive index is not limited to 1.6 and may be freely selected on the basis of manufacturability, material prices, optical characteristics, and an angle of view. In this case, the pitch of the diffraction gratings that is necessary for the refractive index and the range of the angle of view changes. As the refractive index becomes higher, light of a wider incident angle can be guided, and consequently a FOV is expanded. However, on the other hand, the material price is generally higher than that of a low-refractive-index material. Further, if the light guide plate is formed of a resin material in consideration of weight reduction, generally, it is difficult to make the refractive index higher than that of glass, and the FOV is narrower than that of the glass material. The refractive index has to be selected according to the application, and the pitch is designed accordingly. Further, if the material of a light guide plate and the material of a diffraction grating are different from each other as in imprint molding, the refractive indices may be different from each other. In such a case, one having a lower refractive index determines the angle of view. If injection molding is used to reduce the number of manufacturing processes and the number of components, the refractive index is the same in the light guide plate and the diffraction grating.

As described above, the contents described on the image display apparatus of the sixth embodiment (example 6 of image display apparatus) according to the present technology can be applied to the image display apparatuses of the first to fifth embodiments according to the present technology described above, and image display apparatuses of seventh to twelfth embodiments according to the present technology, which will be described later, as long as there is no particular technical inconsistency.

### <8. Seventh Embodiment (Example 7 of Image Display Apparatus)>

An image display apparatus of a seventh embodiment (example 7 of image display apparatus) according to the present technology will be described.

The number of light guide plates is not limited to two, and three or more light guide plates may overlap with each other as necessary. In the case of three light guide plates, three colors of RGB are guided to the respective plates, and thus the FOV can be made wider than in the case of using two light guide plates if a material having the same refractive index is used. If three colors of RGB are formed by two light guide plates, two colors need to be guided to one plate as in Example 1. In such a case, the light guide angle is divided by the two colors, and thus the angle of view is narrowed due to the influence of wavelength dispersion. On the other hand, if each color is guided to one plate, it is not necessary to divide the light guide angle, and a wide range in which the light can be guided can be used for each color, and thus the angle of view is wider than that in the case of the two plates. In order to achieve a high color gamut, the number of wavelengths may be increased, and the number of light guide plates may be increased accordingly.

As described above, the contents described on the image display apparatus of the seventh embodiment (example 7 of image display apparatus) according to the present technology can be applied to the image display apparatuses of the first to sixth embodiments according to the present technology described above, and image display apparatuses of eighth to twelfth embodiments according to the present technology, which will be described later, as long as there is no particular technical inconsistency.

### <9. Eighth Embodiment (Example 8 of Image Display Apparatus)>

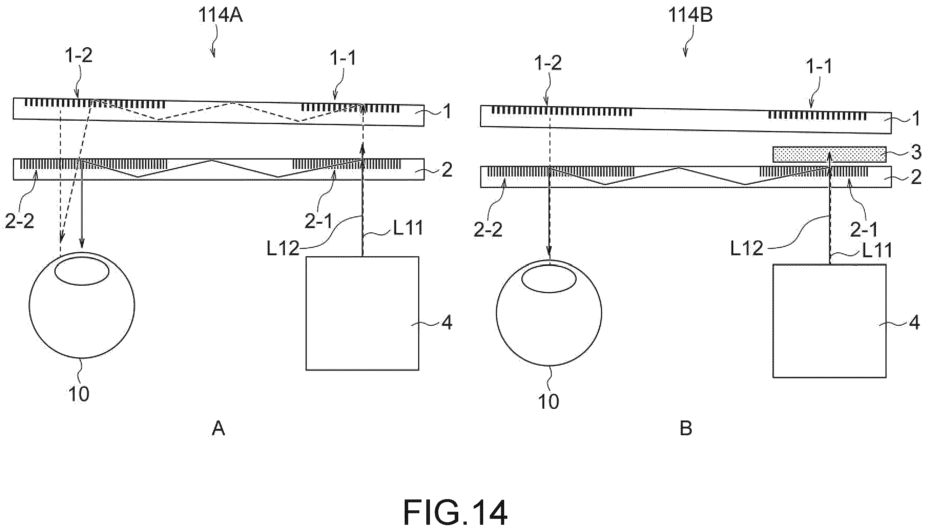

An image display apparatus of an eighth embodiment (example 8 of image display apparatus) according to the present technology will be described with reference to Fig. 14.

Fig. 14 is a diagram showing configuration examples of an image display apparatus of an eighth embodiment according to the present technology. Specifically, A of Fig. 14 shows a configuration example of an image display apparatus 114A, and B of Fig. 14 shows a configuration example of an image display apparatus 114B.

In the image display apparatus of the eighth embodiment according to the present technology, it is suitable to arrange a light guide plate 1 having a high spectral luminous efficacy on the near side and a light guide plate 2 having a low spectral luminous efficacy on the far side. This is because, if the color separation of the diffraction efficiency is not completely performed on each plate, part of the angle of view of the same color guided to the light guide plate on the near side may also be guided to the light guide plate 2 on the far side to enter the eye. This is a measure for making an output angular tolerance, which is caused by a thickness tolerance or an installation tolerance of the light guide plate, less conspicuous. In the case of using three plates, it is desirable to arrange Red, Green, and Blue in this order or Green, Red, and Blue in this order from the near side. However, if the color separation is completely performed in accordance with the light guide plates of the respective colors, the arrangement order is not limited. It may be desirable to arrange an inefficient color on the near side and arrange a highly efficient light guide plate on the far side.

As described above, the contents described on the image display apparatus of the eighth embodiment (example 8 of image display apparatus) according to the present technology can be applied to the image display apparatuses of the first to seventh embodiments according to the present technology described above, and image display apparatuses of ninth to twelfth embodiments according to the present technology, which will be described later, as long as there is no particular technical inconsistency.

### <10. Ninth Embodiment (Example 9 of Image Display Apparatus)>

An image display apparatus of a ninth embodiment (example 9 of image display apparatus) according to the present technology will be described.

A panel of an optical engine 4 constituting an image display apparatus of a ninth embodiment according to the present technology can be selected from transmissive liquid crystal panels, various types of LCOS panels on the market, and DLP panels including a commercially available engine. A suitable panel may be selected on the basis of size, cost, and optical characteristics such as efficiency and wavelength. If it is desired to reduce the number of illumination systems and the engine size, a self-luminous panel such as a micro LED panel or a front lid-type panel using a LED may be used. Further, the light source wavelength is not limited to that of the LED, and a laser may also be used if the color gamut or the efficiency is desired to be increased.

As described above, the contents described on the image display apparatus of the ninth embodiment (example 9 of image display apparatus) according to the present technology can be applied to the image display apparatuses of the first to eighth embodiments according to the present technology described above, and image display apparatuses of tenth to twelfth embodiments according to the present technology, which will be described later, as long as there is no particular technical inconsistency.

### <11. Tenth Embodiment (Example 10 of Image Display Apparatus)>

An image display apparatus of a tenth embodiment (example 10 of image display apparatus) according to the present technology will be described.

In the image display apparatus of the tenth embodiment according to the present technology, the output from the engine may be polarized light or unpolarized light. In the case of polarized light, it is easy to increase the diffraction efficiency by performing a diffraction grating design corresponding to the polarized light. When incident light on the light guide plate has 0 degrees or around 0 degrees, surface reflection on the light guide plate may return to a symmetrical position of the engine panel, and may be side-reflected on the back surface of the panel and output as a ghost. On the other hand, in the case of unpolarized light, since an average diffraction efficiency of s-polarized light and p-polarized light is obtained, the diffraction efficiency is not increased as compared with the case of polarized light in some cases, but the unpolarized light has property that a ghost is hardly generated. For panel options, it can be discretionally selected on the basis of the incident angle, the efficiency, and a ghost request contrast.

As described above, the contents described on the image display apparatus of the tenth embodiment (example 10 of image display apparatus) according to the present technology can be applied to the image display apparatuses of the first to ninth embodiments according to the present technology described above, and image display apparatuses of eleventh and twelfth embodiments according to the present technology, which will be described later, as long as there is no particular technical inconsistency.

### <12. Eleventh Embodiment (Example 11 of Image Display Apparatus)>

An image display apparatus of an eleventh embodiment (example 11 of image display apparatus) according to the present technology will be described.

In the image display apparatus of the eleventh embodiment according to the present technology, the incident angle with respect to the light guide plates 1 and 2 can be discretionally designed. It may be discretionally selected according to the angle of view necessary for eyewear. For example, if light is incident while being inclined outward with respect to a light guide direction, an image is output to the engine side rather than the front side. This is a desirable form when an operator or the like does not want to display the image at the center. If light is incident at zero degrees, it is effective when the image is output to the center with binocular vision. This takes a form similar to that of general eyeglasses. If light is inclined in a direction away from the engine, an effect of widening the angle of view can be obtained if the light source has wavelength dispersion. In such a manner, it may be discretionally designed according to the desired form. The pitch varies depending on the incident angle.

As described above, the contents described on the image display apparatus of the eleventh embodiment (example 11 of image display apparatus) according to the present technology can be applied to the image display apparatuses of the first to tenth embodiments according to the present technology described above, and an image display apparatus of a twelfth embodiment according to the present technology, which will be described later, as long as there is no particular technical inconsistency.

### <13. Twelfth Embodiment (Example 12 of Image Display Apparatus)>

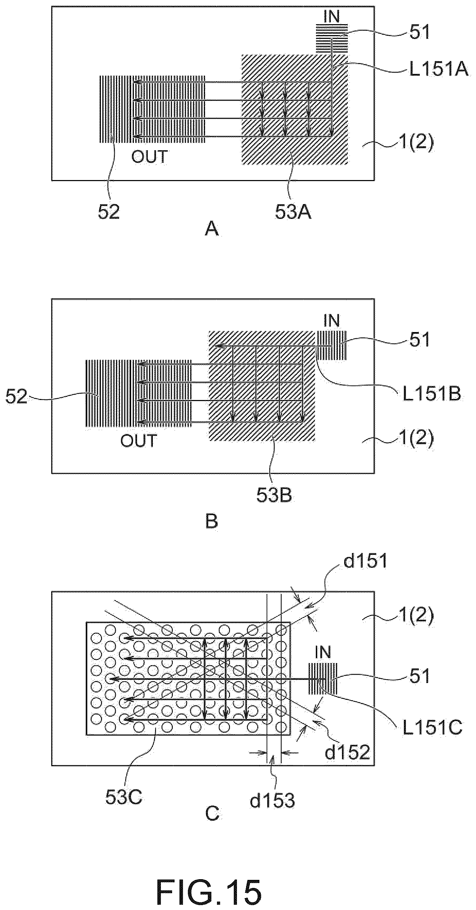

An image display apparatus of a twelfth embodiment (example 12 of image display apparatus) according to the present technology will be described with reference to Fig. 15.

Fig. 15 is a diagram for describing an image display apparatus of a twelfth embodiment according to the present technology, and specifically, a diagram for describing various methods of two-axis pupil expansion. More specifically, A of Fig. 15 is a diagram showing a two-axis system, B of Fig. 15 is a diagram showing a one-axis expansion system, and C of Fig. 15 is a diagram showing a two-dimensional diffraction grating system.

In the image display apparatuses of the first to eleventh embodiments according to the present technology, basically, the diffraction grating has been shown as a one-axis light guide plate having only two types of IN/OUT. However, in the image display apparatus of the twelfth according to the present technology, the two-axis system (A of Fig. 15), the one-axis expansion system (B of Fig. 15), or a two-dimensional diffraction grating system in which the functions of an OUT (output) diffraction grating and a third diffraction grating are integrated (e.g., Manhattan system) (C of Fig. 15), to which third diffraction gratings 53A to 53C are respectively added, are effectively used. Note that, in C of Fig. 15, reference symbols d151 and d152 represent the pitches of the Expansion diffraction gratings, and the reference symbol d153 represents the pitch of the OUT (output) diffraction gratings.

In A of Fig. 15, an input diffraction grating 51, an output diffraction grating 52, and a third diffraction grating 53A are disposed in the light guide plates 1 and 2. In B of Fig. 15, an input diffraction grating 51, an output diffraction grating 52, and a third diffraction grating 53B are disposed in the light guide plates 1 and 2. In C of Fig. 15, an input diffraction grating 51 and a third diffraction grating 53C (having function of output diffraction grating) are disposed in the light guide plates 1 and 2.

As described above, the contents described on the image display apparatus of the twelfth embodiment (example 12 of image display apparatus) according to the present technology can be applied to the image display apparatuses of the first to eleventh embodiments according to the present technology described above, as long as there is no particular technical inconsistency.

### <14. Thirteenth Embodiment (Example 1 of Display Apparatus)>

A display apparatus of a thirteenth embodiment (example 1 of display apparatus) according to the present technology will be described.

The display apparatus of the thirteenth embodiment (example 1 of display apparatus) according to the present technology is a display apparatus that includes a frame mounted on the head of a user and an image display apparatus attached to the frame. The image display apparatus includes the image display apparatus according to at least one of the image display apparatuses of the first to twelfth embodiments according to the present technology. Examples of the display apparatus of the thirteenth embodiment (example 1 of display apparatus) according to the present technology include an eyewear display and a head-mounted display (HMD).

The display apparatus of the thirteenth embodiment according to the present technology may be configured, for example, to be mounted on the head of a user, to have the shape of glasses, and to project image light (video light) onto both eyes.

Note that the embodiments according to the present technology are not limited to the embodiments described above and can be variously modified without departing from the gist of the present technology.

Further, the effects described in this specification are not limitative but are merely illustrative, and other effects may be provided.

Further, the present technology may also take the following configurations.
[1] An image display apparatus, at least including:
   an optical engine;
   at least two light guide plates; and
   an optical element disposed between a first light guide plate and a second light guide plate that constitute the at least two light guide plates, in which
   a first input diffraction grating and a first output diffraction grating are disposed in the first light guide plate,
   a second input diffraction grating and a second output diffraction grating are disposed in the second light guide plate,
   light having a first wavelength band, which is emitted from the optical engine, is guided into the first light guide plate through the second input diffraction grating, the optical element, and the first input diffraction grating in this order, propagated by total reflection, and emitted outside the first light guide plate through the first output diffraction grating, and
   light having a second wavelength band, which is emitted from the optical engine, is guided into the second light guide plate through the second input diffraction grating, propagated by total reflection, and emitted outside the second light guide plate through the second output diffraction grating.
[2] The image display apparatus according to [1], in which
   an air layer and/or a low-refractive-index material layer is disposed between the first light guide plate and the optical element.
[3] The image display apparatus according to [1] or [2], in which
   the optical element is a wavelength-selective optical element.
[4] The image display apparatus according to [3], in which
   the wavelength-selective optical element is an absorption-type filter.
[5] The image display apparatus according to [3], in which
   the wavelength-selective optical element is a reflective multi-layer coating.
[6] The image display apparatus according to [1] or [2], in which
   the optical element includes a wavelength polarization separation filter and an absorption-type polarizing plate.
[7] The image display apparatus according to [1] or [2], in which
   the optical element includes a polarizing plate, a wavelength polarization separation filter, and an absorption-type polarizing plate.
[8] The image display apparatus according to any one of [1] to [7], in which
   at least one diffraction grating of the first input diffraction grating, the first output diffraction grating, the second input diffraction grating, or the second output diffraction grating is a surface relief diffraction grating.
[9] The image display apparatus according to any one of [1] to [8], in which
   at least one diffraction grating of the first input diffraction grating, the first output diffraction grating, the second input diffraction grating, or the second output diffraction grating is a volume hologram.
[10] The image display apparatus according to any one of [1] to [9], in which
   at least one diffraction grating of the first input diffraction grating, the first output diffraction grating, the second input diffraction grating, or the second output diffraction grating is a reflective diffraction grating.
[11] The image display apparatus according to any one of [1] to [10], in which
   at least one diffraction grating of the first input diffraction grating, the first output diffraction grating, the second input diffraction grating, or the second output diffraction grating is a transmissive diffraction grating.
[12] The image display apparatus according to any one of [1] to [11], in which
   refractive indices of the first light guide plate and the second light guide plate and refractive indices of the first input diffraction grating, the first output diffraction grating, the second input diffraction grating, and the second output diffraction grating are substantially identical to each other.
[13] The image display apparatus according to any one of [1] to [12], in which
   refractive indices of the first light guide plate and the second light guide plate and refractive indices of the first input diffraction grating, the first output diffraction grating, the second input diffraction grating, and the second output diffraction grating are different from each other.
[14] The image display apparatus according to any one of [1] to [13], in which
   a third diffraction grating is further disposed in each of the first light guide plate and the second light guide plate.
[15] The image display apparatus according to any one of [1] to [14], in which
   the light having the first wavelength band is blue light, and
   the light having the second wavelength band is green light and red light.
[16] The image display apparatus according to any one of [1] to [15], in which
   an incident angle at which the light having the first wavelength band is incident on the second input diffraction grating and an incident angle at which the light having the second wavelength band is incident on the second input diffraction grating are different from each other.
[17] The image display apparatus according to [1], in which
   the at least two light guide plates include the first light guide plate, the second light guide plate, and a third light guide plate,
   a first optical element is disposed between the first light guide plate and the second light guide plate,
   a second optical element is disposed between the third light guide plate and the first light guide plate,
   the first input diffraction grating and the first output diffraction grating are disposed in the first guide plate,
   the second input diffraction grating and the second output diffraction grating are disposed in the second light guide plate,
   a third input diffraction grating and a third output diffraction grating are disposed in the third light guide plate,
   the light having the first wavelength band, which is emitted from the optical engine, is guided into the first light guide plate through the second input diffraction grating, the first optical element, and the first input diffraction grating in this order, propagated by total reflection, and emitted outside the first light guide plate through the first output diffraction grating,
   the light having the second wavelength band, which is emitted from the optical engine, is guided into the second light guide plate through the second input diffraction grating, propagated by total reflection, and emitted outside the second light guide plate through the second output diffraction grating, and
   light having a third wavelength band, which is emitted from the optical engine, is guided into the third light guide plate through the second input diffraction grating, the first optical element, the first input diffraction grating, the second optical element, and the third input diffraction grating in this order, propagated by total reflection, and emitted outside the third light guide plate through the third output diffraction grating.
[18] The image display apparatus according to [17], in which
   the light having the second wavelength band is green light.
[19] The image display apparatus according to [17], in which
   the light having the first wavelength band and the light having the third wavelength band are blue light, and
   the light having the second wavelength band is green light and red light.
[20] The image display apparatus according to [17], in which
   the light having the second wavelength band is green light,
   the light having the first wavelength band is red light, and
   the light having the third wavelength band is blue light.
[21] A display apparatus, including:
   a frame mounted onto a head of a user; and
   an image display apparatus attached to the frame, in which
   the image display apparatus is the image display apparatus according to any one of [1] to [20].

1 first light guide plate (light guide plate on far side as viewed from optical engine 4)
1-1 1-1 diffraction grating (1-1 input diffraction grating)
1-2 1-2 diffraction grating (1-2 output diffraction grating)
2 second light guide plate (light guide plate on near side as viewed from optical engine 4)
2-1 2-1 diffraction grating (2-1 input diffraction grating)
2-2 2-2 diffraction grating (2-2 output diffraction grating)
3 optical element (wavelength-selective optical element)
4 optical engine
10 eyeball
21, 23 absorption-type polarizing plate
22, 24 wavelength polarization separation filter
25 polarizing plate
31 multi-layer wavelength-selective optical element (multi-layer coating)
41A, 41B, 41C, 41D surface relief diffraction grating
41E volume hologram diffraction grating
101, 103A, 103B, 104, 114A, 114B image display apparatus

## Claims

1. An image display apparatus, at least comprising:
an optical engine;
at least two light guide plates; and
an optical element disposed between a first light guide plate and a second light guide plate that constitute the at least two light guide plates, wherein
a first input diffraction grating and a first output diffraction grating are disposed in the first light guide plate,
a second input diffraction grating and a second output diffraction grating are disposed in the second light guide plate,
light having a first wavelength band, which is emitted from the optical engine, is guided into the first light guide plate through the second input diffraction grating, the optical element, and the first input diffraction grating in this order, propagated by total reflection, and emitted outside the first light guide plate through the first output diffraction grating, and
light having a second wavelength band, which is emitted from the optical engine, is guided into the second light guide plate through the second input diffraction grating, propagated by total reflection, and emitted outside the second light guide plate through the second output diffraction grating.

2. The image display apparatus according to claim 1, wherein
an air layer and/or a low-refractive-index material layer is disposed between the first light guide plate and the optical element.

3. The image display apparatus according to claim 1, wherein
the optical element is a wavelength-selective optical element.

4. The image display apparatus according to claim 3, wherein
the wavelength-selective optical element is an absorption-type filter.

5. The image display apparatus according to claim 3, wherein
the wavelength-selective optical element is a reflective multi-layer coating.

6. The image display apparatus according to claim 1, wherein
the optical element includes a wavelength polarization separation filter and an absorption-type polarizing plate.

7. The image display apparatus according to claim 1, wherein
the optical element includes a polarizing plate, a wavelength polarization separation filter, and an absorption-type polarizing plate.

8. The image display apparatus according to claim 1, wherein
at least one diffraction grating of the first input diffraction grating, the first output diffraction grating, the second input diffraction grating, or the second output diffraction grating is a surface relief diffraction grating.

9. The image display apparatus according to claim 1, wherein
at least one diffraction grating of the first input diffraction grating, the first output diffraction grating, the second input diffraction grating, or the second output diffraction grating is a volume hologram.

10. The image display apparatus according to claim 1, wherein
at least one diffraction grating of the first input diffraction grating, the first output diffraction grating, the second input diffraction grating, or the second output diffraction grating is a reflective diffraction grating.

11. The image display apparatus according to claim 1, wherein
at least one diffraction grating of the first input diffraction grating, the first output diffraction grating, the second input diffraction grating, or the second output diffraction grating is a transmissive diffraction grating.

12. The image display apparatus according to claim 1, wherein
refractive indices of the first light guide plate and the second light guide plate and refractive indices of the first input diffraction grating, the first output diffraction grating, the second input diffraction grating, and the second output diffraction grating are substantially identical to each other.

13. The image display apparatus according to claim 1, wherein
refractive indices of the first light guide plate and the second light guide plate and refractive indices of the first input diffraction grating, the first output diffraction grating, the second input diffraction grating, and the second output diffraction grating are different from each other.

14. The image display apparatus according to claim 1, wherein
a third diffraction grating is further disposed in each of the first light guide plate and the second light guide plate.

15. The image display apparatus according to claim 1, wherein
the light having the first wavelength band is blue light, and
the light having the second wavelength band is green light and red light.

16. The image display apparatus according to claim 1, wherein
an incident angle at which the light having the first wavelength band is incident on the second input diffraction grating and an incident angle at which the light having the second wavelength band is incident on the second input diffraction grating are different from each other.

17. The image display apparatus according to claim 1, wherein
the at least two light guide plates include the first light guide plate, the second light guide plate, and a third light guide plate,
a first optical element is disposed between the first light guide plate and the second light guide plate,
a second optical element is disposed between the third light guide plate and the first light guide plate,
the first input diffraction grating and the first output diffraction grating are disposed in the first guide plate,
the second input diffraction grating and the second output diffraction grating are disposed in the second light guide plate,
a third input diffraction grating and a third output diffraction grating are disposed in the third light guide plate,
the light having the first wavelength band, which is emitted from the optical engine, is guided into the first light guide plate through the second input diffraction grating, the first optical element, and the first input diffraction grating in this order, propagated by total reflection, and emitted outside the first light guide plate through the first output diffraction grating,
the light having the second wavelength band, which is emitted from the optical engine, is guided into the second light guide plate through the second input diffraction grating, propagated by total reflection, and emitted outside the second light guide plate through the second output diffraction grating, and
light having a third wavelength band, which is emitted from the optical engine, is guided into the third light guide plate through the second input diffraction grating, the first optical element, the first input diffraction grating, the second optical element, and the third input diffraction grating in this order, propagated by total reflection, and emitted outside the third light guide plate through the third output diffraction grating.

18. The image display apparatus according to claim 17, wherein
the light having the second wavelength band is green light.

19. The image display apparatus according to claim 17, wherein
the light having the first wavelength band and the light having the third wavelength band are blue light, and
the light having the second wavelength band is green light and red light.

20. The image display apparatus according to claim 17, wherein
the light having the second wavelength band is green light,
the light having the first wavelength band is red light, and
the light having the third wavelength band is blue light.

21. A display apparatus, comprising:
a frame mounted onto a head of a user; and
an image display apparatus attached to the frame, wherein
the image display apparatus is the image display apparatus according to claim 1.
